# EUROPEAN PATENT APPLICATION

(11) **EP 1 371 617 A1**
(43) Date of publication of application: **17.12.2003**
(21) Application number: 03010859.1
(22) Date of filing: 15.05.2003
(51) Int. Cl.: C03C 17/32, C03C 3/06, B08B 3/12

(54) **Method for producing a quartz glass tank for use in ultrasonic cleaning used for fabricating semiconductor and quartz glass tank obtainable from that method**

(30) Priority: 28.05.2002 JP 2002153595
(71) Applicant: Heraeus Quarzglas GmbH & Co. KG, 63450 Hanau (DE); Shin-Etsu Quartz Products Co.,Ltd., Tokyo 160-0023 (JP)
(72) Inventor: Inaki, Kyoichi, Tokorozawa-shi, Saitama 359-1102 (JP); Araki, Itsuo, Kikuchi-shi, Kumamoto 861-1305 (JP)
(74) Representative: Kühn, Hans-Christian

(57) **Abstract**

An object of the present invention is to provide a quartz glass tank for use in ultrasonic cleaning that can be used for a long time without causing etching or layer peeling of the quartz glass and a method for producing the same.

In order to achieve the objects above, the present invention provides a method for producing a quartz glass tank for ultrasonic cleaning used in fabricating semiconductors, wherein the entire surface thereof is coated with a fluoric resin coating having a film thickness in a range of from 10 µm to 5 mm. The fluoric resin is at least one kind selected from tetrafluoroethylene-perfluoroalkylvinylether resin, perfluoroethylene-propylene resin, ethylene-tetrafluoroethylene resin, ethylene-chlorotrifluoroethylene resin, vinyl fluoride resin, vinylidene fluoride resin and tetrafluoroethylene-perfluorodioxole resin. The method can further comprise that before coating with a fluoric resin a frosting process is applied to the surface of the quartz glass tank.

## Description

### Industrial Field of Application

The present invention relates to a method for producing a quartz glass tank for use in ultrasonic cleaning employed in the production of semiconductors. In further detail, the invention relates to a fluoric resin-coated quartz glass tank for use in ultrasonic cleaning to clean quartz glass jigs and silicon wafers by using ultrasonic vibration.

### Prior Art

In the process for producing semiconductors practiced heretofore, quartz glass jigs such as boats and forks have been used to treat the silicon wafers. In order to remove the adhered impurities prior to the use of such jigs and silicon wafers, HF cleaning and pure water cleaning have been employed. Recently, however, with increasing size of quartz glass jigs and silicon wafers, cleaning tanks of resin type has increased in size and are commonly used. However, even in the case HF cleaning and pure water cleaning were applied by using the cleaning tanks above, it was found impossible to sufficiently remove the impurities taken into the microcracks that have been generated during processing of the quartz glass jigs or to remove them from the surface of the jigs, or to remove the deteriorated impurities tightly attached to the surface of the silicon wafers. Accordingly, studies have been made on HF cleaning method with additional ultrasonic vibration applied thereto; however, it was found impossible to apply ultrasonic waves to the resin cleaning tank, particularly to the cleaning tank made of fluoric resin, because fluoric resin absorbed ultrasonic waves. Moreover, another problem was found as such that impurities elute from the resin cleaning tanks to contaminate the quartz glass jigs and silicon wafers. In order to overcome the disadvantages, further studies have been made to produce the cleaning tank using high purity quartz glass. However, since quartz glass is easily etched by hydrofluoric acid and hot phosphoric acid solutions, it was necessary to exchange the tanks after some time of usage. This resulted in an increase in the production cost of silicon wafers. Hence, there has been proposed to coat the surface of the quartz glass cleaning tank with fluoric resin to such a degree to allow the transmission of ultrasonic waves. Conventionally, tetrafluoroethylene resin has been commonly used as the fluoric resin from the viewpoint of price; however, tetrafluoroethylene resin is fibrous in shape, and at temperatures higher than the melting point, melting occurs only on the surface and the resin itself remains porous. Thus, after long use, there occurred problems as such that foreign matter is taken into the pores. This resulted not only in a grayish appearance, but also in a resin functioning as such to release the foreign matter and contaminate the cleaning solution. Furthermore, there were found problems as such that cracks are generated on the fluoric resin coating from the edge portion of the coated quartz glass cleaning tank, or that the adhesiveness of the fluoric resin coating with respect to the quartz glass became impaired, resulting on the blistering of the fluoric resin coating after long-term usage.

### Problems the Invention is to Solve

In the light of the aforementioned circumstances, the present inventors have intensively conducted studies on a cleaning tank using ultrasonic vibration; as a result, it has been found that, by preparing the base body of the cleaning tank with quartz glass, and by coating the surface with a fluoric resin for a thickness in a range of from 10 µm to 5 mm, it not only makes it possible to perform favorable cleaning by allowing transmission of ultrasonic waves, but also allows long term use of quartz glass free from etching by fluoric acid and hot phosphoric acid solutions. Further, by rounding on the edge portion of the quartz glass cleaning tank before forming the coating above, or by performing frosting treatment in addition to the processing above, it has been found that the adhesiveness of the fluoric resin coating to the quartz glass can be further increased, and that no peeling off occurs on the fluoric resin coating even in case ultrasonic vibration is applied thereto. Moreover, it has been found that, by performing ultrasonic cleaning in a HF, HNO₃, or (HF + HNO₃) solution on quartz glass processed members using the quartz glass tank above during a process for producing a quartz glass jig, it is possible to easily remove the impurities residing in the microcracks of the quartz glass jigs or the deteriorated impurities tightly attached to the surface of the silicon wafers. The present invention has been accomplished based on these findings.

An object of the present invention is to provide a quartz glass tank for ultrasonic cleaning capable of long term use free from etching of quartz glass or from peeling off of the film.

Further object of the present invention is to provide a method for producing a quartz glass tank for ultrasonic cleaning above.

### Means for Solving the Problems

In order to achieve the objects above, the present invention provides, in a quartz glass tank for ultrasonic cleaning used in fabricating semiconductors, a quartz glass tank for ultrasonic cleaning the entire surface thereof is coated with a fluoric resin coating having a film thickness in a range of from 10 µm to 5 mm, and a method for producing the same.

The quartz glass tank for ultrasonic cleaning according to the present invention is a quartz glass tank with the entire surface thereof coated with a fluoric resin coating. As said fluoric resin, there can be mentioned, exclusive of tetrafluoroethylene resin whose surface becomes porous, at least one type selected from:
tetrafluoroethylene-perfluoroalkylvinyl ether resin,
perfluoroethylene-propylene resin,
ethylene-tetrafluoroethylene resin,
ethylene-chlorotrifluoroethylene resin,
vinylidene fluoride resin,
vinyl fluoride resin, and
tetrafluoroethylene-perfluorodioxole resin.

Among them, particularly preferred is tetrafluoroethylene- perfluoroalkylvinyl ether resin from the viewpoint of superior resistances against heat, chemicals, corrosion, and wear. The thickness of the fluoric resin coating is preferably in a range of from 10 µm to 5 mm. In case the thickness of the fluoric resin coating is less than 10 µm, not only the pinholes easily generate to allow fluoric acid solution penetrate and reach quartz glass to cause corrosion, but also the coating at the edge portions becomes extremely thin as to facilitate the generation of cracks. In case the film thickness exceeds 5 mm, transmission of the ultrasonic vibration becomes difficult, and it is thereby not preferred. The fluoric resin coating is formed by spraying or by forming a coating using electrodeposition coating of a fluoric resin coating solution obtained by dissolving at least one selected from:
tetrafluoroethylene-perfluoroalkylvinyl ether resin,
perfluoroethylene-propylene resin,
ethylene-tetrafluoroethylene resin,
ethylene-chlorotrifluoroethylene resin,
vinylidene fluoride resin,
vinyl fluoride resin, and
tetrafluoroethylene-perfluorodioxole resin,
in an organic solvent, for instance,
an alkylene glycol such as propylene glycol,
an ester such as ethyl methyl acetate and butyl methyl acetate,
a ketone such as acetone and methyl isobutyl ketone,
an alcohol such as ethylene alcohol and butyl alcohol, toluene, and xylene.

In case of forming the coating, coating is performed for at least three times so that no pinholes should be present on the coated plane, and that the film thickness falls in a range of from 10 µm to 5 mm. In particular, the edge portion is rounded to show a radius R equal to 0.5 mm or more prior to coating, such that the thickness of the coating would not become thin. For the rounding process, there can be mentioned a method comprising heating the edge portion with oxyhydrogen flame, or a method comprising mechanically grinding the edge using a grinder and the like.

Furthermore, in order to improve the adhesiveness of the fluoric resin coating to the quartz glass, the surface of the quartz glass is subjected to frost treatment prior to coating it with the fluoric resin coating solution above. By the frost treatment above, irregularities are formed on the surface of the quartz glass, and the adhesiveness of the fluoric resin coating can be improved by the anchoring effect to reduce peeling off of the film. As the frost treatment, there can be mentioned, for instance, a method comprising spraying the surface with a powder of crystalline silicon dioxide or SiC powder, or a method of forming irregularities on the surface of quartz glass using a chemical solution. In particular, preferred is frost treatment using a chemical solution, because no microcracks generate on the surface of quartz glass, and the mechanical strength of quartz glass remains high. As the chemical solution for use in the frost treatment, there can be mentioned solutions containing hydrogen fluoride or ammonium fluoride, or chemical solutions further containing acetic acid in addition to above, as disclosed in, for example, Japanese Patent Laid-Open No. 267679/1995, Japanese Patent Laid-Open No. 36140/1998, etc. The surface roughness Ra of the surface formed by frost treatment is not particularly limited, but preferably, Ra is in a range of from 0.1 to 10 µm, and Rmax is in a range of from 5 to 50 µm.

By subjecting quartz glass jigs and silicon wafers to hydrofluoric acid cleaning and pure water cleaning while applying ultrasonic vibration using the cleaning tank according to the present invention, the impurities residing in the microcracks that have generated during processing of quartz glass jigs or the deteriorated impurities tightly adhered to the surface of the jigs and silicon wafers can be easily removed.

### Mode for Carrying Out the Invention

The mode for carrying out the present invention is explained below by way of examples, however, it should be understood that the present invention is not limited thereby.

### Examples

### Example 1

A quartz glass tank was prepared for cleaning silicon wafers 12 inch in diameter. Powder of crystalline silicon dioxide was sprayed onto the surface of the tank to round the edge portion of the tank to a radius R of 2 mm. Then, powder of crystalline silicon dioxide consisting of particles 100 to 300 µm in diameter was sprayed onto the entire quartz glass tank to form surface irregularities having a surface roughness Ra of 2.5 µm and Rmax of 20 µm. Then, the surface of the quartz glass tank was covered with tetrafluoroethylene perfluoroalkylvinyl ether resin by electrostatic coating method to yield a dry film thickness of 400 µm. By using the resulting quartz glass tank, a 12-inch diameter silicon wafer was subjected to ultrasonic hydrofluoric acid cleaning and pure water cleaning, and was finally dried by using an IPA dryer. Subsequently, the measurement of the particles on the surface of silicon wafer was performed using a laser particle counter, but merely about 50 particles were counted on the rim portion of the silicon wafer.

### Example 2

Similar to the case of Example 1, a 12-inch diameter quartz glass tank was prepared. The edge portion of the tank was rounded to an R of 1 mm by heating it with an oxyhydrogen flame. Then, the quartz glass tank was subjected to etching treatment using a chemical solution containing hydrofluoric acid and ammonium fluoride to form surface irregularities having a surface roughness Ra of 1.5 µm and Rmax of 13 µm. The surface of the quartz glass tank was coated with tetrafluoroethylene perfluoroalkylvinyl ether resin by electrostatic coating method to yield a dry film thickness of 200 µm. By using the resulting quartz glass tank, a 12-inch diameter silicon wafer was subjected to ultrasonic hydrofluoric acid cleaning and pure water cleaning, and was finally dried by using an IPA dryer. Subsequently, measurement of the particles on the surface of silicon wafer was performed similar to the case in Example 1 using a laser particle counter, but merely about 20 particles were counted on the rim portion of the silicon wafer.

### Example 3

A 20-mm diameter solid quartz glass rod was cut with a diamond cutter for use in grooving to form 10 grooves at a width of 4 mm and a pitch of 10 mm. Then, a (50% HF + 10% HNO₃) solution was placed inside a quartz glass tank having a resin coating formed by coating with tetrafluoroethylene perfluoroalkylvinyl ether resin coating solution, and the grooved solid rod was immersed therein to perform ultrasonic fluoronitric acid cleaning and pure water cleaning. The surface layer of the solid quartz glass rod was analyzed by ICP-AES analysis, and only 5 ppb or less of heavy metal elements were found.

### Comparative Example 1

Similar to the case in Example 1, a 12-inch diameter quartz glass tank was prepared. Cleaning was performed in the same manner as in Example 1, except for forming a fluoric acid resin coating. As a result, 700 particles were observed on the surface of silicon wafer. The particles were generated to the central portion of the silicon wafer, and resulted in low yield of silicon wafer.

### Comparative Example 2

Similar to the case in Example 1, a 12-inch diameter quartz glass tank was prepared, and the edge portion of the tank was rounded to an R of 1 mm by heating with oxyhydrogen flame. Then, polytetrafluoroethylene resin was electrostatically coated to form a 1 µm thick fluoric resin coating. By using the quartz glass tank, ultrasonic hydrofluoric acid cleaning was performed on a 12-inch diameter silicon wafer, and after pure water cleaning, drying was finally carried out by using an IPA dryer. Thereafter, particles present on the surface were counted by using a laser particle counter, and about 50 particles were observed on the rim portion of the silicon wafer. However, blistering of fluoric resin coating occurred every time ultrasonic cleaning was performed, and the fluoric resin coating fell off on tenth cleaning.

### Comparative Example 3

A 12-inch diameter polytetrafluoroethylene resin tank was prepared. Ultrasonic hydrofluoric acid cleaning of a silicon wafer was attempted by using the polytetrafluoroethylene resin tank in vain, because no ultrasonic waves were transmitted.

### Comparative Example 4

Similar to the case of Example 3, grooving treatment was performed on a solid quartz glass rod. The resulting solid rod was subjected to hydrofluoric acid cleaning and pure water cleaning. On analyzing the surface layer of the solid rod, heavy metal elements were found to be present at a concentration of 20 ppb.

### Effect of the Invention

The quartz glass tank for ultrasonic cleaning is free of etching by hydrofluoric acid or hot phosphoric acid, and can be used stably for a long time because no peeling off of fluoric resin coating occurs. Furthermore, by using the quartz glass tank for ultrasonic cleaning above for ultrasonic cleaning of quartz glass jigs and silicon wafers, the impurities residing in the microcracks formed on the jigs or the deteriorated impurities tightly attached to the surface of the jigs and silicon wafers can be easily removed. The quartz glass tank above can be easily produced by coating the surface of a quartz glass tank with a fluoric resin coating at a film thickness of from 10 µm to 5 mm, and is hence of high industrial value.

## Claims

1. A method for producing a quartz glass tank for use in ultrasonic cleaning used in fabricating a semiconductor, wherein a fluoric resin coating agent is coated on a surface of the quartz glass tank and a fluoric resin coating having a film thickness in the range of 10 µm to 5 mm is formed.

2. A method for producing a quartz glass tank for use in ultrasonic cleaning as set forth in claim 1, wherein after a ridge portion of the quartz glass tank is rounded to show a radius R equal to or more than 0.5 mm, the fluoric resin coating agent is coated.

3. A method for producing a quartz glass tank for use in ultrasonic cleaning as set forth in claim 1 or claim 2, wherein after a frosting process is applied to the surface of the quartz glass tank, the fluoric resin coating agent is coated.

4. A method for producing a quartz glass tank for use in ultrasonic cleaning as set forth in claim 3, wherein the frosting process is a chemical surface treatment.

5. A method for producing a quartz glass tank for use in ultrasonic cleaning as set forth in any one of claims 1 to 4, wherein the fluoric resin is at least one kind selected from tetrafluoroethylene-perfluoroalkylvinylether resin, perfluoroethylene-propylene resin, ethylene-tetrafluoroethylene resin, ethylene-chlorotrifluoroethylene resin, vinyl fluoride resin, vinylidene fluoride resin and tetrafluoroethylene-perfluorodioxole resin.

6. A quartz glass tank with a fluoric resin coating obtainable from the method as claimed in anyone of the claims 1 to 5 for use in ultrasonic cleaning used in fabricating a semiconductor, wherein an entire surface of the quartz glass tank is covered with a fluoric resin coating having a film thickness in the range of 10 µm to 5 mm.

7. A quartz glass tank for use in ultrasonic cleaning used in fabricating a semiconductor as set forth in claim 6, wherein the fluoric resin is at least one kind selected from tetrafluoroethylene-perfluoroalkylvinylether resin, perfluoroethylene-propylene resin, ethylene-tetrafluoroethylene resin, ethylene-chlorotrifluoroethylene resin, vinyl fluoride resin, vinylidene fluoride resin and tetrafluoroethylene-perfluorodioxole resin.
